# EUROPEAN PATENT APPLICATION

(11) **EP 4 641 435 A1**
(43) Date of publication of application: **29.10.2025**
(21) Application number: 25160484.9
(22) Date of filing: 27.02.2025
(51) Int. Cl.: G06F 40/216, G06F 40/30, G06F 40/35, G06F 40/44, G06F 40/56

(54) **LARGE LANGUAGE MODELS AND KNOWLEDGE GRAPHS FOR ENTERPRISE RESOURCE PLANNING SYSTEMS**

(30) Priority: 22.04.2024 US 202418642183
(71) Applicant: SAP SE, 69190 Walldorf (DE)
(72) Inventor: PEKEL, Isil, 69190 Walldorf (DE); SASAKI, Felix, 69190 Walldorf (DE); ZAMANSANI, Zahra, 69190 Walldorf (DE); VELKOSKI, Darko, 69190 Walldorf (DE); SCHREIBER, Sebastian, 69190 Walldorf (DE)
(74) Representative: Müller-Boré & Partner Patentanwälte PartG mbB

(57) **Abstract**

In an example embodiment, a knowledge graph is used to provide human-readable names and further contextual and descriptive information of data in database views and tables. This makes this information findable, accessible, identifiable, and reusable, and enables the re-use of such information across use cases. Further, an LLM is used to generate descriptive information that can then be used to generate embeddings to compare natural language questions provided by developers with objects in an ERP.

## Description

### TECHNICAL FIELD

This document generally relates to computer systems. More specifically, this document relates to use of large language models (LLMs) and knowledge graphs for enterprise resource planning systems.

### BACKGROUND

Enterprise Resource Planning (ERP) software integrates into a single system various processes used to run an organization, such as finance, manufacturing, human resources, supply chain, services, procurement, and others. These processes typically provide intelligence, visibility, and efficiency across most if, not all, aspects of an organization. One example of ERP software is SAP^{®} S/4 HANA from SAP SE of Walldorf, Germany.

A LLM refers to an artificial intelligence (AI) system that has been trained on an extensive dataset to understand and generate human language. These models are designed to process and comprehend natural language in a way that allows them to answer questions, engage in conversations, generate text, and perform various language-related tasks.

### BRIEF DESCRIPTION OF DRAWINGS

The present disclosure is illustrated by way of example and not limitation in the figures of the accompanying drawings, in which like references indicate similar elements.
Figure 1 is a block diagram illustrating a system for storing and accessing data used to generate a machine learning model, in accordance with an example embodiment.
Figure 2 is a block diagram illustrating a knowledge graph created based on the example raw data.
Figure 3 is a diagram illustrating a knowledge graph model, in accordance with an example embodiment.
Figure 4 is a flow diagram illustrating a method for accessing data in an ERP system for use in generating a machine learning model, in accordance with an example embodiment.
Figure 5 is a block diagram illustrating an architecture of software, which can be installed on any one or more of the devices described above.
Figure 6 illustrates a diagrammatic representation of a machine in the form of a computer system within which a set of instructions may be executed for causing the machine to perform any one or more of the methodologies discussed herein, according to an example embodiment.

### DETAILED DESCRIPTION

The description that follows discusses illustrative systems, methods, techniques, instruction sequences, and computing machine program products. In the following description, for purposes of explanation, numerous specific details are set forth in order to provide an understanding of various example embodiments of the present subject matter. It will be evident, however, to those skilled in the art, that various example embodiments of the present subject matter may be practiced without these specific details.

In some circumstances, it may be beneficial to accelerate the access to customer data in an ERP system, specifically when this customer data is used in the development of a machine learning model. As part of this process, developers need to provide a precise definition of what data they need to develop the machine learning model. In the case of S/4, this definition is in the form of a Structured Query Language (SQL) statement to be used for data extraction.

More specifically, machine learning model developers access the S/4 data by exploring views, which are temporary projections of data stored in a database. The views expose data stored in the database tables in a format that can be based on human language semantics, making the data easier to consume in this format. The developers also explore the underlying database tables to locate relevant tables containing the data that is required for their machine learning model.

Several technical problems are encountered with this approach, however. Firstly, ERP database tables have short, cryptic, non-descriptive names. To the extent that descriptions are provided, they are very short. Second, there are a large number of database tables and views in an ERP system, making it difficult to identify relevant objects. Third, while views themselves often have descriptive names, these names still do not fully describe what their respective views contain. Fourth, complementary data, such as business objects, application areas, etc. are very scatter and require developers to search for additional information in different platforms. Fifth, there is no natural language access to any sort of interface that can be used to access the data needed for the developer to generate a machine learning model.

In an example embodiment, a knowledge graph is used to provide human-readable names and further contextual and descriptive information of data in database views and tables. This makes this information findable, accessible, identifiable, and reusable, and enables the re-use of such information across use cases. Further, an LLM is used to generate descriptive information that can then be used to generate embeddings to compare natural language questions provided by developers with objects in an ERP.

Knowledge graphs encode data in a graph representation, with nodes representing entities such as pieces of information in a table and edges between the nodes representing relationships between the entities. Knowledge graphs, however, rely on the data that they contain. If the data and its corresponding descriptions, names, etc. are not comprehensive, then the knowledge graph will not be able to provide reliable results. Additionally, knowledge graphs do not have the ability to understand the context of a query. Moreover, searching a knowledge graph necessitates that the user has some knowledge regarding the terminology used in the knowledge graph.

LLMs used to generate information are generally referred to as Generative Artificial Intelligence (GAI) models. A GAI model may be implemented as a generative pre-trained transformer (GPT) model or a bidirectional encoder. A GPT model is a type of machine learning model that uses a transformer architecture, which is a type of deep neural network that excels at processing sequential data, such as natural language.

A bidirectional encoder is a type of neural network architecture in which the input sequence is processed in two directions: forward and backward. The forward direction starts at the beginning of the sequence and processes the input one token at a time, while the backward direction starts at the end of the sequence and processes the input in reverse order.

By processing the input sequence in both directions, bidirectional encoders can capture more contextual information and dependencies between words, leading to better performance.

The bidirectional encoder may be implemented as a Bidirectional Long Short-Term Memory (BiLSTM) or BERT (Bidirectional Encoder Representations from Transformers) model.

Each direction has its own hidden state, and the final output is a combination of the two hidden states.

Long Short-Term Memories (LSTMs) are a type of recurrent neural network (RNN) designed to overcome the vanishing gradient problem in traditional RNNs, which can make it difficult to learn long-term dependencies in sequential data.

LSTMs include a cell state, which serves as a memory that stores information over time. The cell state is controlled by three gates: the input gate, the forget gate, and the output gate. The input gate determines how much new information is added to the cell state, while the forget gate decides how much old information is discarded. The output gate determines how much of the cell state is used to compute the output. Each gate is controlled by a sigmoid activation function, which outputs a value between 0 and 1 that determines the amount of information that passes through the gate.

In BiLSTM, there is a separate LSTM for the forward direction and the backward direction. At each time step, the forward and backward LSTM cells receive the current input token and the hidden state from the previous time step. The forward LSTM processes the input tokens from left to right, while the backward LSTM processes them from right to left.

The output of each LSTM cell at each time step is a combination of the input token and the previous hidden state, which allows the model to capture both short-term and long-term dependencies between the input tokens.

BERT applies bidirectional training of a model known as a transformer to language modelling. This is in contrast to prior art solutions that looked at a text sequence either from left to right or combined left to right and right to left. A bidirectionally trained language model has a deeper sense of language context and flow than single-direction language models.

More specifically, the transformer encoder reads the entire sequence of information at once, and thus is considered to be bidirectional (although one could argue that it is, in reality, non-directional). This characteristic allows the model to learn the context of a piece of information based on all of its surroundings.

In other example embodiments, a generative adversarial network (GAN) embodiment may be used. A GAN is a supervised machine learning model that has two sub-models: a generator model that is trained to generate new examples and a discriminator model that tries to classify examples as either real or generated. The two models are trained together in an adversarial manner (using a zero-sum game according to game theory), until the discriminator model is fooled roughly half the time, which means that the generator model is generating plausible examples.

The generator model takes a fixed-length random vector as input and generates a sample in the domain in question. The vector is drawn randomly from a Gaussian distribution, and the vector is used to seed the generative process. After training, points in this multidimensional vector space will correspond to points in the problem domain, forming a compressed representation of the data distribution. This vector space is referred to as a latent space, or a vector space comprised of latent variables. Latent variables, or hidden variables, are those variables that are important for a domain but are not directly observable.

The discriminator model takes an example from the domain as input (real or generated) and predicts a binary class label of real or fake (generated).

Generative modeling is an unsupervised learning problem, although a clever property of the GAN architecture is that the training of the generative model is framed as a supervised learning problem.

The two models, the generator and discriminator, are trained together. The generator generates a batch of samples, and these, along with real examples from the domain, are provided to the discriminator and classified as real or fake.

The discriminator is then updated to get better at discriminating real and fake samples in the next round and, importantly, the generator is updated based on how well the generated samples fooled the discriminator.

In another example embodiment, the GAI model is a Variational AutoEncoders (VAEs) model. VAEs comprise an encoder network that compresses the input data into a lower-dimensional representation, called a latent code, and a decoder network that generates new data from the latent code. In either case, the GAI model contains a generative classifier, which can be implemented as, for example, a naive Bayes classifier.

The present solution works with any type of GAI model, although an implementation that specifically is used with an LLM will be described.

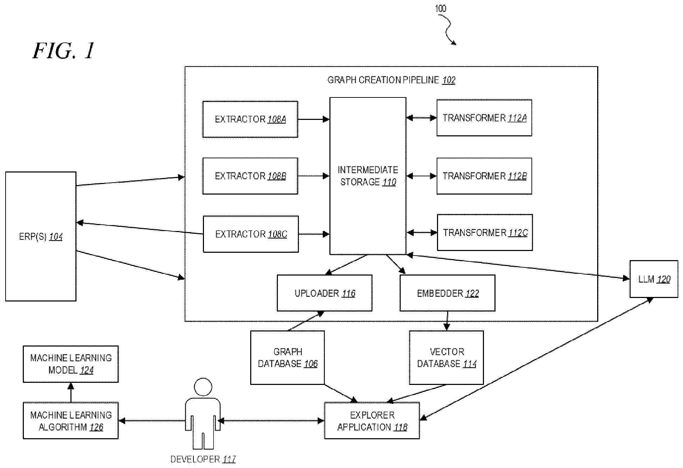

Figure 1 is a block diagram illustrating a system 100 for storing and accessing data used to generate a machine learning model, in accordance with an example embodiment. Here, a graph creation pipeline 102 acts to extract data from one or more ERPs 104, transform the data, create a knowledge graph from the data, and store the knowledge graph in a graph database 106. More specifically, graph creation pipeline 102 utilizes one or more extractors 108A, 108B, 108C. Extractors 108A-108C are extract, transform, load (ETL) pipelines that extract data to be stored in an intermediate storage 110. In an example embodiment, the extractors 108A-108C extract metadata from the one or more ERPs 104 via an OData Application Program Interface (API). At the time of the extraction, data is in a raw stage and thus it cannot be inserted directly into a database. Rather, the data stored in intermediate storage 110 is transformed by one or more transformers 112A, 112B, 112C. Transformers 112A, 112B, 112C are state functions that convert the raw data into graph components or embeddings, which then can be inserted into the graph database 106 and a vector database 114, respectively. Each transformer 112A, 112B, 112C parses the raw data and maps the raw data to graph nodes or graph edges to create some or all of the knowledge graph. This knowledge graph information is then stored in the intermediate storage 110, where at some point later it can be uploaded via uploader 116 to the graph database 106. The uploader 116 is a software script that fetches data from the intermediate storage 110 and uploads it to the graph database 106.

As an example, assume the following raw data:

```
 "State": {
      "ID": "I _PurchaseOrder. State",
      "name": "State",
      "description": "State of a PO",
      "properties":
            {
                  "dataSource": {
                  "table": "T123",
                  "column": "ABC"
                  }
      }
```

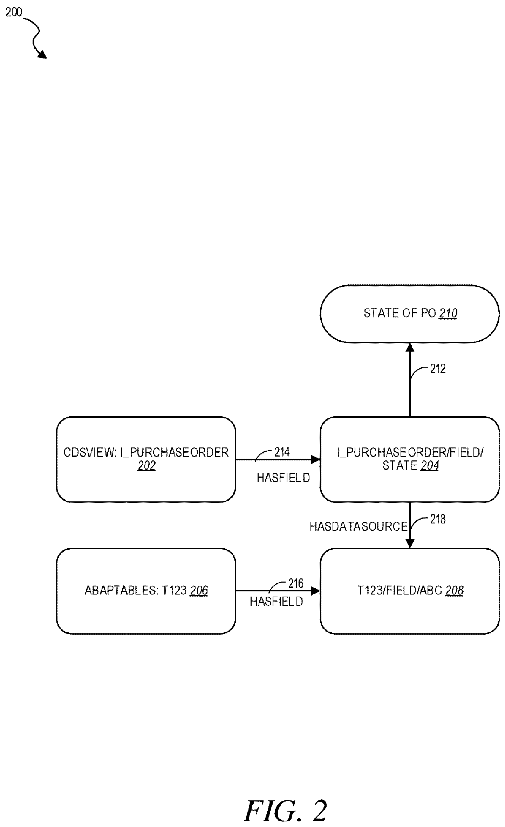

Figure 2 is a block diagram illustrating a knowledge graph 200 created based on the example raw data. Specifically, in the example raw data, the properties of a column "State" on a view called "I_PurchaseOrder" are shown. It contains the description as "State of a PO" and shows the source of the data, which in this case is a table. The related fields are mapped to graph nodes, such as nodes 202, 204, 206, 208, 210. The relations between the related fields are mapped to graph edges, such as edges 212, 214, 216, 218. Since the description itself (represented by node 210) has no further properties, it is kept as a literal attachment to node 204.

When the objects in raw data are mapped to graph entities, these may be stored in, for example, .nt format. This is a file format in which all information is encoded in triples: subject, predicate, object. Subject is a unique graph node, such as a view. Predicate is a relation, such as "hasField, and object would be another graph node or a literal, such as a name or description.

Referring back to Figure 1, a developer 117 interacts with an explorer application 118 to submit a natural language question to the explorer application 118. The explorer application 118 then uses an LLM 120 to generate a hypothetical description of the natural language question and to generate a hypothetical description of one or more entities in the knowledge graph. The hypothetical description of the natural language question can then be embedded by an embedder 122. The embedder 122 acts to embed the hypothetical description of the natural language question. An embedding is a set of coordinates in a latent n-dimensional space such that the proximity (e.g., cosine distance) of the coordinates to other coordinates is indicative of the similarity of the information embedded to those coordinates. The embedding from the hypothetical description of the natural language question may be called a question embedding.

Additionally, the sentence descriptions of the one or more entities in the knowledge graph can also be embedded by the embedder 122 into entity embeddings. All of the embeddings can be stored in a vector database 114. This allows the explorer application 118 to quickly and efficiently compare the natural language question to the entities in the knowledge graph to identify one or more entities that match the user question.

The embeddings may be generated by an embedding model in the embedder 122. Embeddings can be created using machine learning models specifically for the embeddings or specialized layers within other machine learning models. These embedding models/layers therefore rely on extensive training of their own.

The embedding machine learning model may be trained by any model from among many different potential supervised or unsupervised machine learning algorithms. Examples of supervised learning algorithms include artificial neural networks, Bayesian networks, instance-based learning, support vector machines, linear classifiers, quadratic classifiers, k-nearest neighbor, decision trees, and hidden Markov models.

In an example embodiment, the embedding machine learning algorithm used to train the machine learning model may iterate among various weights (which are the parameters) that will be multiplied by various input variables and evaluate a loss function at each iteration, until the loss function is minimized, at which stage the weights/parameters for that stage are learned. Specifically, the weights are multiplied by the input variables as part of a weighted sum operation, and the weighted sum operation is used by the loss function.

In some example embodiments, the training of the embedding machine learning model may take place as a dedicated training phase. In other example embodiments, the embedding machine learning model may be retrained dynamically at runtime by the user providing live feedback.

Referring back to the LLM 120, the LLM 120 may be requested to generate the hypothetical descriptions by submitting prompts to the LLM 120. In an example embodiment, a different prompt may be used for the hypothetical description of the natural language question than for the hypothetical description of the one or more entities. In a further example embodiment, different prompts may be used for different types of entities, such as, for example, one prompt for objects in the knowledge graph and a different prompt for name entities in the knowledge graph. The following are example prompts for questions, objects, and name entities, respectively:

```
     Refinement Query Expansion Strategy Prompt:
     """
     Refine and broaden the question using SAP-terminology. Incorporate more in-
     depth information and present various alternative versions or scenarios to
     enhance the clarity and specificity of the initial query.
     Question: {question}
     Rephrased question: """
     HyDE Query Expansion Strategy Prompt based on object description:
     """
     As an expert in SAP with a deep understanding of S/4HANA ABAP tables
     and CDS Views,
     I need you to compose a detailed passage that includes the relevant tables,
     views,
     and relationships to answer my query. Please ensure that all table names
     mentioned
     are valid and that the information provided is accurate and precise.
     Here's an example of the type of question and passage I'm looking for:
     Example question:
     A question related to Operational Accounting Document Item.
     Example passage:
     The I_OperationalAcctgDocItem CDS view can be explained as follows.
     General description: Operational Accounting Document Item.
     Short description: This CDS view offers access to all details of an operational
     accounting document item (database table BSEG), including key business
     entities like G/L account, company code, cost center, or profit center. It
     includes essential attributes of business entities such as clearing data, account
     assignment data, amounts in various currencies, and payment data. Additional
     attributes and hierarchies can be accessed via associations.
     This CDS view is instrumental in answering business questions like: What are
     the specifics of a single posting? What postings have accumulated on a cost
     center or other objects over the year? What is the company code currency
     amount of the accounting document? This CDS view is also enabled for data
     extraction to SAP
     BW/4HANA.
     Title: Operational Accounting Document Item.
     ###
     My question: {question}
     Passage: """
     HyDE Query Expansion Strategy Prompt based on Name entry:
     """
     As an expert in SAP with a deep understanding of S/4HANA ABAP tables
     and CDS Views,
     I need you to compose a list of the relevant table and view names. Please
     ensure
     that all table and view names mentioned are valid, and do not make things up.
     Here's an example of the type of question and passage I'm looking for:
     ###
     Example question:
     A question related to Operational Accounting Document Item.
     Example passage:
     I_OperationalAcetgDocItem,
     ###
     My question: How many sales orders are pending for delivery?
     \
     Passage:
     The format of the output text is only a json list that without any extra
     sentences."""
```

Notably, these prompts not only describe generally that a hypothetical description of a question/entity should be generated by the LLM 120, but also describe the general structure of the desired output, thereby allowing the desired output when generating hypothetical descriptions of questions to match the desired output when generating sentence descriptions of entities, which allows their respective entities to be more easily generated in a manner that allows for meaningful comparison.

It should also be noted that it is not necessary that the entities of the knowledge graph be embedded in response to the user question. In some example embodiments, sentence descriptions of metadata of entities in the knowledge graph are generated by creating a sentence using the metadata. For example, the metadata may contain name, title, label, and description and a sentence may be formed using a rule as follows "The entity {name} has the following title: {title} and can be described as follows: {description}." These sentence descriptions can then be embedded and preloaded in the vector database 114 prior to the actual user question being received. In some further example embodiments, only a subset of available metadata (specifically views and table-related semantic data) are used to generate sentence descriptions, which will be embedded into entity embeddings.

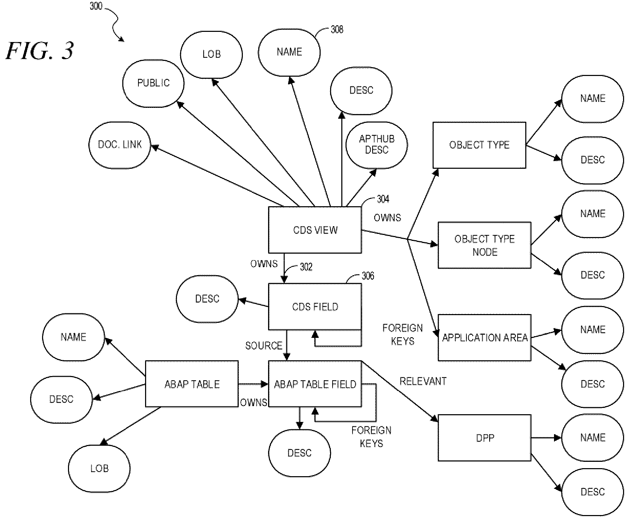

Furthermore, the knowledge graph stored in the graph database 106 is modeled in such a way so as to allow developers to navigate the entire system by moving from semantic objects (such as object nodes and object node type) to views, and from views to tables, and back. Figure 3 is a diagram illustrating a knowledge graph model 300, in accordance with an example embodiment. Here, for example, if a Core Data Services (CDS) view has an ownership relationship with a CDS field, then an edge 302 representing "owns" is drawn between a node representing CDS view 304 and a node representing CDS field 306. Semantic objects, such as those representing descriptive fields, such as name 308, are attached as literals to their corresponding objects, such as CDS view 304.

In addition, as much semantic data as possible has been integrated to make objects more easily searchable via the LLM 120. In the case of views, this semantic data can often be found in the view metadata itself. For tables, on the other hand, as described earlier, such information may not be found in the table metadata. As such, the knowledge graph makes use of the direct links from table nodes to view nodes in the knowledge graph.

The views do not store data themselves, but they define concepts such as purchase order and sales order by pulling data from the tables, define different access and analytic properties, add semantical meaning to the columns, and so forth. All of the metadata, such as names, descriptions, titles, labels, foreign keys, and the like may be extracted via an OData API to be used in creating the knowledge graph.

At search/comparison time, rather than search for tables directly, since their available metadata is often insufficient for semantic matching with user questions, the semantically-more rich names and descriptions of views are used as well as the knowledge in the knowledge graph to efficiently identify the tables underlying the views.

In some example embodiments, a list of table or view candidates that are similar to the user question can be reranked using the LLM 120. More specifically, the similar table and view candidates can be submitted to the LLM 120 along with a prompt to request that the LLM 120 rank those table and view candidates based on their relevance to the user question. In other words, in addition to using the LLM 120 to generate the hypothetical descriptions used for the embeddings that will be used to find entities similar to a user question, the LLM 120 can also be used to rank those similar entities. Two distinct LLM-based re-ranking chains may be designed, with one tailored to tables and one tailored to views.

Once the developer identifies the data relevant to a machine learning model 124 they are designing, they can use this data to generate the machine learning model 124 by labeling the data and passing it through a machine learning algorithm 126.

The machine learning model 124 may be trained by any model from among many different potential supervised or unsupervised machine learning algorithms. Examples of supervised learning algorithms include artificial neural networks, Bayesian networks, instance-based learning, support vector machines, linear classifiers, quadratic classifiers, k-nearest neighbor, decision trees, and hidden Markov models.

In an example embodiment, the machine learning algorithm 126 used to train the machine learning model 124 may iterate among various weights (which are the parameters) that will be multiplied by various input variables and evaluate a loss function at each iteration, until the loss function is minimized, at which stage the weights/parameters for that stage are learned. Specifically, the weights are multiplied by the input variables as part of a weighted sum operation, and the weighted sum operation is used by the loss function.

In some example embodiments, the training of the machine learning model 124 may take place as a dedicated training phase. In other example embodiments, the machine learning model 124 may be retrained dynamically at runtime by a user providing live feedback.

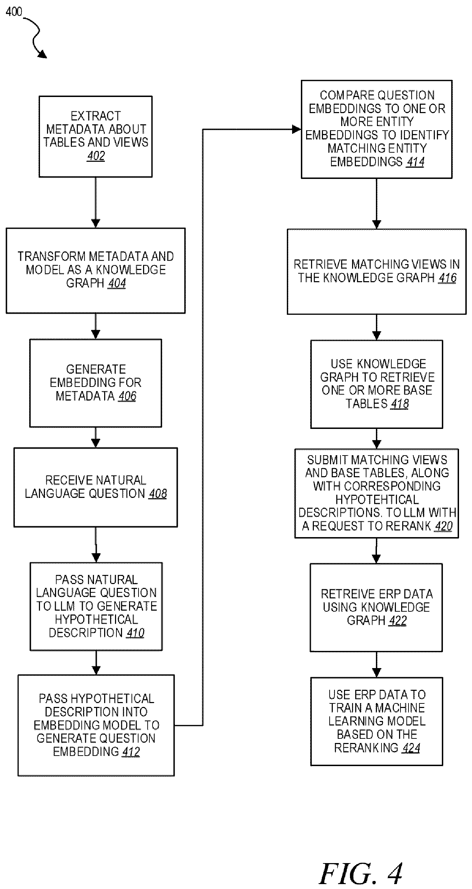

Figure 4 is a flow diagram illustrating a method 400 for accessing data in an ERP system for use in generating a machine learning model, in accordance with an example embodiment. At operation 402, metadata about tables and views in an ERP is extracted. At operation 404, the metadata is transformed and modeled as a knowledge graph. At operation 406, for each of one or more pieces of metadata about tables and views in the ERP, an embedding is generated by forming a sentence description for the one or more pieces of metadata and passing this sentence description into an embedding model to generate an entity embedding for the metadata.

At operation 408, a natural language question is received. At operation 410, the natural language question is passed to the LLM to generate a hypothetical description of the natural language question. At operation 412, the hypothetical description of the natural language question is passed to he embedding model to generate a question embedding for the natural language question.

At operation 414, the question embedding is compared to one or more entity embeddings to identify one or more matching entity embeddings that are similar to the question embedding. This may be performed by, for example, executing a k-nearest neighbor search.

At operation 416, matching views in the knowledge graph that are referenced in entities corresponding to the one or more matching entity embeddings are retrieved. At operation 418, the knowledge graph is used to retrieve one or more base tables, from the tables in the ERP, that are referenced in entities in the knowledge graph corresponding to the one or more matching entity embeddings.

At operation 420, the matching views and the one or more base tables, along with their corresponding sentence descriptions, are submitted to the LLM with a request to rerank the matching entities based on relevance to the natural language question.

At operation 422, based on the reranked matching entities, data from the ERP is retrieved (such as by an end user issuing one or more SQL statements using the entity names retrieved from the knowledge graph). At operation 424, this retrieved data is used to train a machine learning model. At

In view of the disclosure above, various examples are set forth below. It should be noted that one or more features of an example, taken in isolation or combination, should be considered within the disclosure of this application.

Example 1 is a system comprising: at least one hardware processor; and a computer-readable medium storing instructions that, when executed by the at least one hardware processor, cause the at least one hardware processor to perform operations comprising: extracting metadata about tables and views from an ERP system; transforming the metadata; modeling the transformed metadata as a knowledge graph;for each of one or more pieces of the metadata about the tables and the views, generate an embedding by forming a sentence description of the transformed metadata and then passing the sentence description into an embedding model to generate an entity embedding for the metadata;

receiving a natural language question; passing the natural language question to an LLM to generate a hypothetical description of the natural language question; passing the hypothetical description of the natural language question into the embedding model to generate a question embedding for the natural language question; and comparing the question embedding to one or more entity embeddings to identify one or more matching entity embeddings that are similar to the question embedding.

In Example 2, the subject matter of Example 1 includes, wherein the operations further comprise using the matching entity embeddings to retrieve data from the ERP and using the retrieved data to train a machine learning model using a machine learning algorithm.

In Example 3, the subject matter of Examples 1-2 includes, wherein the comparing includes executing a k-nearest neighbor search.

In Example 4, the subject matter of Examples 1-3 includes, wherein the operations further comprise: retrieving matching views in the knowledge graph that are referenced in entities corresponding to the one or more matching entity embeddings.

In Example 5, the subject matter of Example 4 includes, wherein the operations further comprise using the knowledge graph to retrieve one or more base tables, from the tables in the ERP, that are referenced in entities in the knowledge graph corresponding to the one or more matching entity embeddings.

In Example 6, the subject matter of Example 5 includes, wherein the operations further comprise submitting the matching views, and the one or more base tables, along with their corresponding sentence descriptions, are submitted to the LLM with a request to rerank the matching entities based on relevance to the natural language question.

In Example 7, the subject matter of Examples 1-6 includes, wherein the embedding model is a machine learning model.

Example 8 is a method comprising: extracting metadata about tables and views from an ERP system; transforming the metadata; modeling the transformed metadata as a knowledge graph; for each of one or more pieces of the metadata about the tables and the views, generate an embedding by forming a sentence description of the transformed metadata and then passing the sentence description into an embedding model to generate an entity embedding for the metadata;

passing the natural language question to an LLM to generate a hypothetical description of the natural language question; passing the hypothetical description of the natural language question into the embedding model to generate a question embedding for the natural language question; and comparing the question embedding to one or more entity embeddings to identify one or more matching entity embeddings that are similar to the question embedding.

In Example 9, the subject matter of Example 8 includes, using the matching entity embeddings to retrieve data from the ERP and using the retrieved data to train a machine learning model using a machine learning algorithm.

In Example 10, the subject matter of Examples 8-9 includes, wherein the comparing includes executing a k-nearest neighbor search.

In Example 11, the subject matter of Examples 8-10 includes, retrieving matching views in the knowledge graph that are referenced in entities corresponding to the one or more matching entity embeddings.

In Example 12, the subject matter of Example 11 includes, using the knowledge graph to retrieve one or more base tables, from the tables in the ERP, that are referenced in entities in the knowledge graph corresponding to the one or more matching entity embeddings.

In Example 13, the subject matter of Example 12 includes, submitting the matching views, and the one or more base tables, along with their corresponding sentence descriptions, are submitted to the LLM with a request to rerank the matching entities based on relevance to the natural language question.

In Example 14, the subject matter of Examples 8-13 includes, wherein the embedding model is a machine learning model.

Example 15 is a non-transitory machine-readable medium storing instructions which, when executed by one or more processors, cause the one or more processors to perform operations comprising: extracting metadata about tables and views from an ERP system; transforming the metadata; modeling the transformed metadata as a knowledge graph; for each of one or more pieces of the metadata about the tables and the views, generate an embedding by forming a sentence description of the transformed metadata and then passing the sentence description into an embedding model to generate an entity embedding for the metadata;passing the natural language question to an LLM to generate a hypothetical description of the natural language question; passing the hypothetical description of the natural language question into the embedding model to generate a question embedding for the natural language question; and comparing the question embedding to one or more entity embeddings to identify one or more matching entity embeddings that are similar to the question embedding.

In Example 16, the subject matter of Example 15 includes, wherein the operations further comprise using the matching entity embeddings to retrieve data from the ERP and using the retrieved data to train a machine learning model using a machine learning algorithm.

In Example 17, the subject matter of Examples 15-16 includes, wherein the comparing includes executing a k-nearest neighbor search.

In Example 18, the subject matter of Examples 15-17 includes, wherein the operations further comprise: retrieving matching views in the knowledge graph that are referenced in entities corresponding to the one or more matching entity embeddings.

In Example 19, the subject matter of Example 18 includes, wherein the operations further comprise using the knowledge graph to retrieve one or more base tables, from the tables in the ERP, that are referenced in entities in the knowledge graph corresponding to the one or more matching entity embeddings.

In Example 20, the subject matter of Example 19 includes, wherein the operations further comprise submitting the matching views, and the one or more base tables, along with their corresponding sentence descriptions, are submitted to the LLM with a request to rerank the matching entities based on relevance to the natural language question.

Example 21 is at least one machine-readable medium including instructions that, when executed by processing circuitry, cause the processing circuitry to perform operations to implement any of Examples 1-20.

Example 22 is an apparatus comprising means to implement of any of Examples 1-20.

Example 23 is a system to implement any of Examples 1-20.

Example 24 is a method to implement any of Examples 1-20.

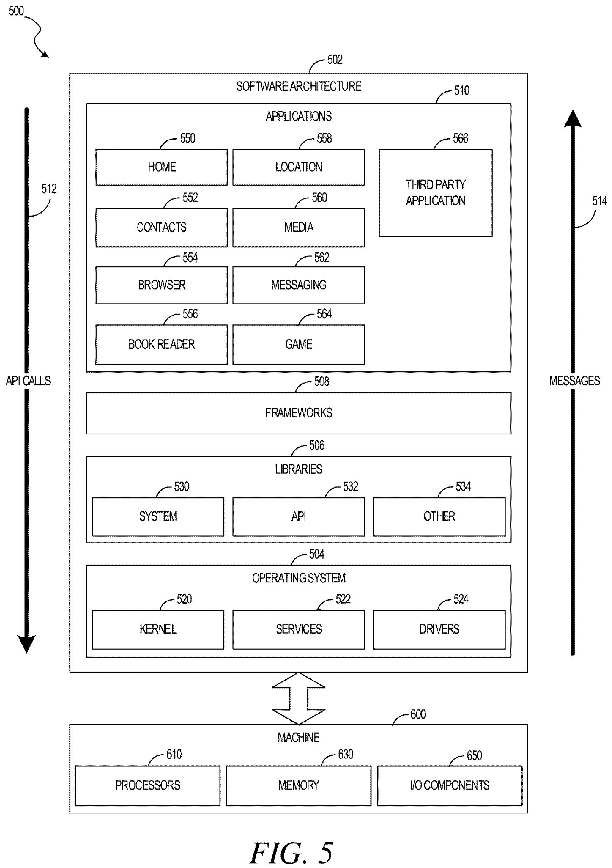

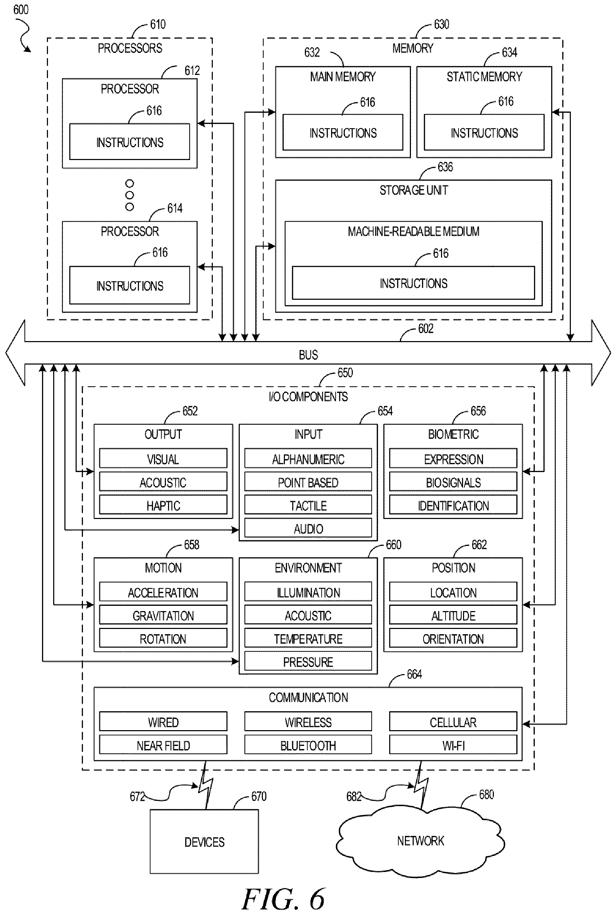

Figure 5 is a block diagram 500 illustrating a software architecture 502, which can be installed on any one or more of the devices described above. Figure 5 is merely a non-limiting example of a software architecture, and it will be appreciated that many other architectures can be implemented to facilitate the functionality described herein. In various embodiments, the software architecture 502 is implemented by hardware such as a machine 600 of Figure 6 that includes processors 610, memory 630, and input/output (I/O) components 650. In this example architecture, the software architecture 502 can be conceptualized as a stack of layers where each layer may provide a particular functionality. For example, the software architecture 502 includes layers such as an operating system 504, libraries 506, frameworks 508, and applications 510. Operationally, the applications 510 invoke API calls 512 through the software stack and receive messages 514 in response to the API calls 512, consistent with some embodiments.

In various implementations, the operating system 504 manages hardware resources and provides common services. The operating system 504 includes, for example, a kernel 520, services 522, and drivers 524. The kernel 520 acts as an abstraction layer between the hardware and the other software layers, consistent with some embodiments. For example, the kernel 520 provides memory management, processor management (e.g., scheduling), component management, networking, and security settings, among other functionalities. The services 522 can provide other common services for the other software layers. The drivers 524 are responsible for controlling or interfacing with the underlying hardware, according to some embodiments. For instance, the drivers 524 can include display drivers, camera drivers, BLUETOOTH^{®} or BLUETOOTH^{®} Low-Energy drivers, flash memory drivers, serial communication drivers (e.g., Universal Serial Bus (USB) drivers), Wi-Fi^{®} drivers, audio drivers, power management drivers, and so forth.

In some embodiments, the libraries 506 provide a low-level common infrastructure utilized by the applications 510. The libraries 506 can include system libraries 530 (e.g., C standard library) that can provide functions such as memory allocation functions, string manipulation functions, mathematic functions, and the like. In addition, the libraries 506 can include API libraries 532 such as media libraries (e.g., libraries to support presentation and manipulation of various media formats such as Moving Picture Experts Group-4 (MPEG4), Advanced Video Coding (H.264 or AVC), Moving Picture Experts Group Layer-3 (MP3), Advanced Audio Coding (AAC), Adaptive Multi-Rate (AMR) audio codec, Joint Photographic Experts Group (JPEG or JPG), or Portable Network Graphics (PNG)), graphics libraries (e.g., an OpenGL framework used to render in two dimensions (2D) and three dimensions (3D) in a graphic context on a display), database libraries (e.g., SQLite to provide various relational database functions), web libraries (e.g., WebKit to provide web browsing functionality), and the like. The libraries 506 can also include a wide variety of other libraries 534 to provide many other APIs to the applications 510.

The frameworks 508 provide a high-level common infrastructure that can be utilized by the applications 510, according to some embodiments. For example, the frameworks 508 provide various graphical user interface functions, high-level resource management, high-level location services, and so forth. The frameworks 508 can provide a broad spectrum of other APIs that can be utilized by the applications 510, some of which may be specific to a particular operating system 504 or platform.

In an example embodiment, the applications 510 include a home application 550, a contacts application 552, a browser application 554, a book reader application 556, a location application 558, a media application 560, a messaging application 562, a game application 564, and a broad assortment of other applications, such as a third-party application 566. According to some embodiments, the applications 510 are programs that execute functions defined in the programs. Various programming languages can be employed to create one or more of the applications 510, structured in a variety of manners, such as object-oriented programming languages (e.g., Objective-C, Java, or C++) or procedural programming languages (e.g., C or assembly language). In a specific example, the third-party application 566 (e.g., an application developed using the ANDROID^{™} or IOS^{™} software development kit (SDK) by an entity other than the vendor of the particular platform) may be mobile software running on a mobile operating system such as IOS^{™}, ANDROID^{™}, WINDOWS^{®} Phone, or another mobile operating system. In this example, the third-party application 566 can invoke the API calls 512 provided by the operating system 504 to facilitate functionality described herein.

Figure 6 illustrates a diagrammatic representation of a machine 600 in the form of a computer system within which a set of instructions may be executed for causing the machine 600 to perform any one or more of the methodologies discussed herein, according to an example embodiment. Specifically, Figure 6 shows a diagrammatic representation of the machine 600 in the example form of a computer system, within which instructions 616 (e.g., software, a program, an application, an applet, an app, or other executable code) for causing the machine 600 to perform any one or more of the methodologies discussed herein may be executed. For example, the instructions 616 may cause the machine 600 to execute the method 400 of Figure 4. Additionally, or alternatively, the instructions 616 may implement Figures 1-4 and so forth. The instructions 616 transform the general, non-programmed machine 600 into a particular machine 600 programmed to carry out the described and illustrated functions in the manner described. In alternative embodiments, the machine 600 operates as a standalone device or may be coupled (e.g., networked) to other machines. In a networked deployment, the machine 600 may operate in the capacity of a server machine or a client machine in a server-client network environment, or as a peer machine in a peer-to-peer (or distributed) network environment. The machine 600 may comprise, but not be limited to, a server computer, a client computer, a personal computer (PC), a tablet computer, a laptop computer, a netbook, a set-top box (STB), a personal digital assistant (PDA), an entertainment media system, a cellular telephone, a smart phone, a mobile device, a wearable device (e.g., a smart watch), a smart home device (e.g., a smart appliance), other smart devices, a web appliance, a network router, a network switch, a network bridge, or any machine capable of executing the instructions 616, sequentially or otherwise, that specify actions to be taken by the machine 600. Further, while only a single machine 600 is illustrated, the term "machine" shall also be taken to include a collection of machines 600 that individually or jointly execute the instructions 616 to perform any one or more of the methodologies discussed herein.

The machine 600 may include processors 610, memory 630, and I/O components 650, which may be configured to communicate with each other such as via a bus 602. In an example embodiment, the processors 610 (e.g., a central processing unit (CPU), a reduced instruction set computing (RISC) processor, a complex instruction set computing (CISC) processor, a graphics processing unit (GPU), a digital signal processor (DSP), an application-specific integrated circuit (ASIC), a radio-frequency integrated circuit (RFIC), another processor, or any suitable combination thereof) may include, for example, a processor 612 and a processor 614 that may execute the instructions 616. The term "processor" is intended to include multi-core processors that may comprise two or more independent processors (sometimes referred to as "cores") that may execute instructions 616 contemporaneously. Although Figure 6 shows multiple processors 610, the machine 600 may include a single processor 612 with a single core, a single processor 612 with multiple cores (e.g., a multi-core processor 612), multiple processors 612, 614 with a single core, multiple processors 612, 614 with multiple cores, or any combination thereof.

The memory 630 may include a main memory 632, a static memory 634, and a storage unit 636, each accessible to the processors 610 such as via the bus 602. The main memory 632, the static memory 634, and the storage unit 636 store the instructions 616 embodying any one or more of the methodologies or functions described herein. The instructions 616 may also reside, completely or partially, within the main memory 632, within the static memory 634, within the storage unit 636, within at least one of the processors 610 (e.g., within the processor's cache memory), or any suitable combination thereof, during execution thereof by the machine 600.

The I/O components 650 may include a wide variety of components to receive input, provide output, produce output, transmit information, exchange information, capture measurements, and so on. The specific I/O components 650 that are included in a particular machine will depend on the type of machine. For example, portable machines such as mobile phones will likely include a touch input device or other such input mechanisms, while a headless server machine will likely not include such a touch input device. It will be appreciated that the I/O components 650 may include many other components that are not shown in Figure 6. The I/O components 650 are grouped according to functionality merely for simplifying the following discussion, and the grouping is in no way limiting. In various example embodiments, the I/O components 650 may include output components 652 and input components 654. The output components 652 may include visual components (e.g., a display such as a plasma display panel (PDP), a light-emitting diode (LED) display, a liquid crystal display (LCD), a projector, or a cathode ray tube (CRT)), acoustic components (e.g., speakers), haptic components (e.g., a vibratory motor, resistance mechanisms), other signal generators, and so forth. The input components 654 may include alphanumeric input components (e.g., a keyboard, a touch screen configured to receive alphanumeric input, a photo-optical keyboard, or other alphanumeric input components), point-based input components (e.g., a mouse, a touchpad, a trackball, a joystick, a motion sensor, or another pointing instrument), tactile input components (e.g., a physical button, a touch screen that provides location and/or force of touches or touch gestures, or other tactile input components), audio input components (e.g., a microphone), and the like.

In further example embodiments, the I/O components 650 may include biometric components 656, motion components 658, environmental components 660, or position components 662, among a wide array of other components. For example, the biometric components 656 may include components to detect expressions (e.g., hand expressions, facial expressions, vocal expressions, body gestures, or eye tracking), measure biosignals (e.g., blood pressure, heart rate, body temperature, perspiration, or brain waves), identify a person (e.g., voice identification, retinal identification, facial identification, fingerprint identification, or electroencephalogram-based identification), and the like. The motion components 658 may include acceleration sensor components (e.g., accelerometer), gravitation sensor components, rotation sensor components (e.g., gyroscope), and so forth. The environmental components 660 may include, for example, illumination sensor components (e.g., photometer), temperature sensor components (e.g., one or more thermometers that detect ambient temperature), humidity sensor components, pressure sensor components (e.g., barometer), acoustic sensor components (e.g., one or more microphones that detect background noise), proximity sensor components (e.g., infrared sensors that detect nearby objects), gas sensors (e.g., gas detection sensors to detect concentrations of hazardous gases for safety or to measure pollutants in the atmosphere), or other components that may provide indications, measurements, or signals corresponding to a surrounding physical environment. The position components 662 may include location sensor components (e.g., a Global Positioning System (GPS) receiver component), altitude sensor components (e.g., altimeters or barometers that detect air pressure from which altitude may be derived), orientation sensor components (e.g., magnetometers), and the like.

Communication may be implemented using a wide variety of technologies. The I/O components 650 may include communication components 664 operable to couple the machine 600 to a network 680 or devices 670 via a coupling 682 and a coupling 672, respectively. For example, the communication components 664 may include a network interface component or another suitable device to interface with the network 680. In further examples, the communication components 664 may include wired communication components, wireless communication components, cellular communication components, near field communication (NFC) components, Bluetooth^{®} components (e.g., Bluetooth^{®} Low Energy), Wi-Fi^{®} components, and other communication components to provide communication via other modalities. The devices 670 may be another machine or any of a wide variety of peripheral devices (e.g., coupled via a USB).

Moreover, the communication components 664 may detect identifiers or include components operable to detect identifiers. For example, the communication components 664 may include radio-frequency identification (RFID) tag reader components, NFC smart tag detection components, optical reader components (e.g., an optical sensor to detect one-dimensional bar codes such as Universal Product Code (UPC) bar code, multi-dimensional bar codes such as QR code, Aztec code, Data Matrix, Dataglyph, MaxiCode, PDF417, Ultra Code, UCC RSS-2D bar code, and other optical codes), or acoustic detection components (e.g., microphones to identify tagged audio signals). In addition, a variety of information may be derived via the communication components 664, such as location via Internet Protocol (IP) geolocation, location via Wi-Fi^{®} signal triangulation, location via detecting an NFC beacon signal that may indicate a particular location, and so forth.

The various memories (e.g., 630, 632, 634, and/or memory of the processor(s) 610) and/or the storage unit 636 may store one or more sets of instructions 616 and data structures (e.g., software) embodying or utilized by any one or more of the methodologies or functions described herein. These instructions (e.g., the instructions 616), when executed by the processor(s) 610, cause various operations to implement the disclosed embodiments.

As used herein, the terms "machine-storage medium," "device-storage medium," and "computer-storage medium" mean the same thing and may be used interchangeably. The terms refer to a single or multiple storage devices and/or media (e.g., a centralized or distributed database, and/or associated caches and servers) that store executable instructions and/or data. The terms shall accordingly be taken to include, but not be limited to, solid-state memories, and optical and magnetic media, including memory internal or external to processors. Specific examples of machine-storage media, computer-storage media, and/or device-storage media include non-volatile memory, including by way of example semiconductor memory devices, e.g., erasable programmable read-only memory (EPROM), electrically erasable programmable read-only memory (EEPROM), field-programmable gate array (FPGA), and flash memory devices; magnetic disks such as internal hard disks and removable disks; magneto-optical disks; and CD-ROM and DVD-ROM disks. The terms "machine-storage media," "computer-storage media," and "device-storage media" specifically exclude carrier waves, modulated data signals, and other such media, at least some of which are covered under the term "signal medium" discussed below.

In various example embodiments, one or more portions of the network 680 may be an ad hoc network, an intranet, an extranet, a virtual private network (VPN), a local-area network (LAN), a wireless LAN (WLAN), a wide-area network (WAN), a wireless WAN (WWAN), a metropolitan-area network (MAN), the Internet, a portion of the Internet, a portion of the public switched telephone network (PSTN), a plain old telephone service (POTS) network, a cellular telephone network, a wireless network, a Wi-Fi^{®} network, another type of network, or a combination of two or more such networks. For example, the network 680 or a portion of the network 680 may include a wireless or cellular network, and the coupling 682 may be a Code Division Multiple Access (CDMA) connection, a Global System for Mobile communications (GSM) connection, or another type of cellular or wireless coupling. In this example, the coupling 682 may implement any of a variety of types of data transfer technology, such as Single Carrier Radio Transmission Technology (1xRTT), Evolution-Data Optimized (EVDO) technology, General Packet Radio Service (GPRS) technology, Enhanced Data rates for GSM Evolution (EDGE) technology, third Generation Partnership Project (3GPP) including 3G, fourth generation wireless (4G) networks, Universal Mobile Telecommunications System (UMTS), High-Speed Packet Access (HSPA), Worldwide Interoperability for Microwave Access (WiMAX), Long-Term Evolution (LTE) standard, others defined by various standard-setting organizations, other long-range protocols, or other data transfer technology.

The instructions 616 may be transmitted or received over the network 680 using a transmission medium via a network interface device (e.g., a network interface component included in the communication components 664) and utilizing any one of a number of well-known transfer protocols (e.g., HTTP). Similarly, the instructions 616 may be transmitted or received using a transmission medium via the coupling 672 (e.g., a peer-to-peer coupling) to the devices 670. The terms "transmission medium" and "signal medium" mean the same thing and may be used interchangeably in this disclosure. The terms "transmission medium" and "signal medium" shall be taken to include any intangible medium that is capable of storing, encoding, or carrying the instructions 616 for execution by the machine 600, and include digital or analog communications signals or other intangible media to facilitate communication of such software. Hence, the terms "transmission medium" and "signal medium" shall be taken to include any form of modulated data signal, carrier wave, and so forth. The term "modulated data signal" means a signal that has one or more of its characteristics set or changed in such a manner as to encode information in the signal.

The terms "machine-readable medium," "computer-readable medium," and "device-readable medium" mean the same thing and may be used interchangeably in this disclosure. The terms are defined to include both machine-storage media and transmission media. Thus, the terms include both storage devices/media and carrier waves/modulated data signals.

## Claims

1. A system comprising:
at least one hardware processor; and
a computer-readable medium storing instructions that, when executed by the at least one hardware processor, cause the at least one hardware processor to perform operations comprising:
extracting metadata about tables and views from an Enterprise Resource Planning (ERP) system;
transforming the metadata;
modeling the transformed metadata as a knowledge graph;
for each of one or more pieces of the metadata about the tables and the views, generate an embedding by forming a sentence description of the transformed metadata and then passing the sentence description into an embedding model to generate an entity embedding for the metadata;
receiving a natural language question;
passing the natural language question to an LLM to generate a hypothetical description of the natural language question;
passing the hypothetical description of the natural language question into the embedding model to generate a question embedding for the natural language question; and
comparing the question embedding to one or more entity embeddings to identify one or more matching entity embeddings that are similar to the question embedding.

2. The system of claim 1, wherein the operations further comprise using the matching entity embeddings to retrieve data from the ERP and using the retrieved data to train a machine learning model using a machine learning algorithm;
and/or
wherein the comparing includes executing a k-nearest neighbor search.

3. The system of claim 1 or 2, wherein the operations further comprise retrieving
matching views in the knowledge graph that are referenced in entities corresponding to the one or more matching entity embeddings;
and/or
wherein the operations further comprise: using the knowledge graph to retrieve one or more base tables, from the tables in the ERP, that are referenced in entities in the knowledge graph corresponding to the one or more matching entity embeddings.

4. The system of any one of the preceding claims, wherein the operations further comprise submitting
the matching views, and the one or more base tables, along with their corresponding sentence descriptions, are submitted to the LLM with a request to rerank the matching entities based on relevance to the natural language question.

5. The system of any one of the preceding claims, wherein the embedding model is a machine learning model.

6. A method comprising:
extracting metadata about tables and views from an Enterprise Resource Planning (ERP) system;
transforming the metadata;
modeling the transformed metadata as a knowledge graph;
for each of one or more pieces of the metadata about the tables and the views, generate an embedding by forming a sentence description of the transformed metadata and then passing the sentence description into an embedding model to generate an entity embedding for the metadata;
receiving a natural language question;
passing the natural language question to an LLM to generate a hypothetical description of the natural language question;
passing the hypothetical description of the natural language question into the embedding model to generate a question embedding for the natural language question; and
comparing the question embedding to one or more entity embeddings to identify one or more matching entity embeddings that are similar to the question embedding.

7. The method of claim 6, further comprising using the matching entity embeddings to retrieve data from the ERP and using the retrieved data to train a machine learning model using a machine learning algorithm;
and/or
wherein the comparing includes executing a k-nearest neighbor search.

8. The method of claim 6 or 7, further comprising: using the knowledge graph to retrieve one or more base tables, from the tables in the ERP, that are referenced in entities in the knowledge graph corresponding to the one or more matching entity embeddings.

9. The method of any one of claims 6 to 8, further comprising using the knowledge graph to retrieve one or more base tables, from the tables in the ERP, that are referenced in entities in the knowledge graph corresponding to the one or more matching entity embeddings.

10. The method of any one of claims 6 to 9, further comprising submitting the matching views, and the one or more base tables, along with their corresponding sentence descriptions, are submitted to the LLM with a request to rerank the matching entities based on relevance to the natural language question.

11. The method of any one of claims 6 to 10, wherein the embedding model is a machine learning model.

12. A non-transitory machine-readable medium storing instructions which, when executed by one or more processors, cause the one or more processors to perform operations comprising:
extracting metadata about tables and views from an Enterprise Resource Planning (ERP) system;
transforming the metadata;
modeling the transformed metadata as a knowledge graph;
for each of one or more pieces of the metadata about the tables and the views, generate an embedding by forming a sentence description of the transformed metadata and then passing the sentence description into an embedding model to generate an entity embedding for the metadata;
receiving a natural language question;
passing the natural language question to an LLM to generate a hypothetical description of the natural language question;
passing the hypothetical description of the natural language question into the embedding model to generate a question embedding for the natural language question; and
comparing the question embedding to one or more entity embeddings to identify one or more matching entity embeddings that are similar to the question embedding.

13. The non-transitory machine-readable medium of claim 12, wherein the operations further comprise using the matching entity embeddings to retrieve data from the ERP and using the retrieved data to train a machine learning model using a machine learning algorithm;
and/or
wherein the comparing includes executing a k-nearest neighbor search.

14. The non-transitory machine-readable medium of claim 12 or 13, wherein the operations further comprise:
retrieving matching views in the knowledge graph that are referenced in entities corresponding to the one or more matching entity embeddings;
and/or
wherein the operations further comprise using the knowledge graph to retrieve one or more base tables, from the tables in the ERP, that are referenced in entities in the knowledge graph corresponding to the one or more matching entity embeddings.

15. The non-transitory machine-readable medium of any one of claims 12 to 14, wherein the operations further comprise submitting the matching views, and the one or more base tables, along with their corresponding sentence descriptions, are submitted to the LLM with a request to rerank the matching entities based on relevance to the natural language question.
